# EUROPEAN PATENT SPECIFICATION

(11) **EP 2 154 916 B1**
(45) Date of publication and mention of the grant of the patent: **21.05.2014**
(21) Application number: 08305468.4
(22) Date of filing: 13.08.2008
(51) Int. Cl.: H04W 8/26, H04W 36/14, H04W 88/06

(54) **Device and method for assigning automatically a unique IP home address to interfaces of a communication equipment connected to different access networks**
Vorrichtung und Verfahren zur automatischen Zuweisung einer einmaligen IP-Heimadresse an Schnittstellen von an verschiedenen Zugangsnetzwerken angeschlossenen Kommunikationsgeräten
Dispositif et procédé pour l'attribution automatique d'une adresse privée IP unique à des interfaces d'un équipement de communication raccordé à différents réseaux d'accès

(43) Date of publication of application: 17.02.2010
(73) Proprietor: Alcatel Lucent, 75007 Paris (FR)
(72) Inventor: Mongazon-Cazavet, Bruno, 91240 SAINT MICHEL-SUR-ORGE (FR); Taburet, François, 92120 MONTROUGE (FR)
(74) Representative: El Manouni, Josiane

(56) References cited:
- WO-A-2008/052580
- WAKIKAWA TOYOTA ITC S GUNDAVELLI CISCO R: "IPv4 Support for Proxy Mobile IPv6; draft-ietf-netlmm-pmip6-ipv4-supp ort-04.txt" IETF STANDARD-WORKING-DRAFT, INTERNET ENGINEERING TASK FORCE, IETF, CH, vol. netlmm, no. 4, 14 July 2008 (2008-07-14), XP015056166 ISSN: 0000-0004
- PREMEC NOKIA SIEMENS NETWORKS T SAVOLAINEN NOKIA D: "Inter-technology handover in netlmm domain; draft-premec-netlmm-inter tech-handover-00.txt" INTER-TECHNOLOGY HANDOVER IN NETLMM DOMAIN; DRAFT-PREMEC-NETLMM-INTER TECH-HANDOVER-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 April 2008 (2008-04-26), XP015059733

## Description

The present invention relates to communication equipments comprising at least two interfaces for simultaneous communications with different access networks, and more precisely to assignment to the terminal interfaces of an IP home address with a protocol called DHCP (Dynamic Host Configuration Protocol).

One means here by "communication equipment" any type of equipment capable of establishing wired communication(s) and/or wireless communication(s) with other equipments through at least two different access networks. So, it may be a computer, a laptop, a mobile (or cellular) telephone, or a personal digital assistant (or PDA) with a communication module, for instance.

As it is known by the man skilled in the art, the above mentioned communication equipments have been designed to take advantage of access multiplicity for various purposes, such as data/voice session continuity, and in various communication modes, such as single communication or dual communication.

Document WAKIKAWA TOYOTA ITC S GUNDAVELLI CISCO R:"IPv4 Support for Proxy Mobile IPv6; draft-ieff-netlmm-pmip6-ipv4-support-04.txt"IETF STANDARD-WORKING-DRAFT, INTERNET ENGINEERING TASK FORCE, IETF, CH, vol. netlmm, n°4, 14 July 2008 (2008-07-14), XP015056166 ISSN: 0000-0004, and document PREMEC NOKIA SIEMENS NETWORKS T SAVOLAINEN NOKIA D: "Inter-technology handover in netlmm domain; drfat-premec-netlmm-inter tech-handover-00.txt" INTER-TECHNOLOGY HANDOVER IN NETLMM DOMAIN; DRAFT-PREMEC-NETLMM-INTER TECH-HANDOVER-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 April 2008 (2008-04-26), XP015059733, provide technological background.

Capabilities of these terminal equipments allow them to inter-work with multiple access networks, but the latter need also to inter-work therebetween in order to offer some functionalities, such as session continuity, to these terminal equipments.

At least two solutions allowing IP session continuity (data including VoIP (Voice over IP)) through simultaneous accesses to IP communication equipments have been proposed.

A first solution (conceived for wireless communications) consists in integrating a MIP (Mobile IP) layer into the communication equipments. This first solution offers some good results but it also shows several drawbacks.

Indeed, it requires not only an additional MIP layer software into the communication equipments, but also the corresponding MIP support in the access networks.

Moreover, it implies a significant overhead (typically of 20 bytes) in wireless (radio) access networks, especially on the air interface (in particular in GSM/GPRS/EDGE networks). This overhead results from the fact that a MIP layer is used to provide a single IP home address usage (HoA) over multiple interfaces of a communication equipment, each interface having its own allocated IP address (FACoA (Foreign Agent Care of Address) or CoCoA (Colocated Care of Address)), and therefore that the communication equipment is responsible for the management of the current address binding between HoA and CoA in collaboration with the Home Agent (HA), and the communication equipment (CoCoA) or the network (FACoA) is responsible for tunnelling/de-tunnelling packets between the HoA and the current CoA.

A second solution consists in using a MIP support, and more precisely a Proxy-MIP function, solely inside the network infrastructure. In this case the communication equipment does not comprise an additional MIP layer, but it relies on the existing MIP capability of the network infrastructure. In particular, the protocol DHCP is used to allocate IP home addresses to the communication equipments, and foreign agent (FA) and home agent (HA) functions are provided by the network. Since IP session continuity is to be achieved, the same (unique) IP home address must be configured and used on the multiple interfaces of a communication equipment. Such a behaviour requires provisioning the network infrastructure to deliver the same IP home address in multiple access networks and handling the allocation/renewal/release of the IP home addresses using DHCP over multiple interfaces, which is not an easy task because an IP stack does not allow an IP address (typically the home address) to be assigned to more than one interface and most operating system do not provide any mechanism to control the DHCP client protocol.

So the object of this invention is to propose an alternative solution liable to improve the situation, and compatible with all commonly used operating system.

For this purpose, the invention provides a device, as defined in claim 1, intended for assigning IP home address with a DHCP protocol into a communication equipment (comprising at least two interfaces for simultaneous communications with different access networks), and comprising a management means arranged for requesting an IP home address for an interface near a DHCP server and for assigning the requested IP home address to this interface.

This device is **characterized in that** it further comprises a control means arranged for compelling its management means i) to use a unique terminal identifier (in the DHCP "client id" extension) each time it requests an IP home address for a new interface, in order to get always a unique IP home address from this DHCP server, and ii) to switch properly assignment of this unique IP home address from the old (current) interface to the new interface to be used.

The management means may be arranged, when it has previously assigned the unique IP home address giving the unique terminal identifier to a first (or current) interface that must be replaced with the new interface (i.e. to be used), for i) invalidating the unique IP home address configured on the currently used first interface by renewing the address using an auxiliary terminal identifier, and ii) assigning the unique IP home address giving the unique terminal identifier to the new interface.

In the first step (i), the address renewal on the first (old) interface automatically fails because the auxiliary terminal identifier does not match a valid DHCP address definition on server side. The first (old) interface is thus left in a "zero IP address" state. This last state allows the second step (ii) to be performed without local conflicts regarding IP address assignment on multiple interfaces.

In a variant, the control means may be arranged, when the management means has previously assigned the unique IP home address giving the unique terminal identifier to a first interface that must be replaced with the new interface, for compelling the management means to suspend locally the previous assignment to the first interface in order to assign the unique IP home address giving the unique terminal identifier to the new interface.

The invention also provides a computer software product, as defined in claim 6, comprising a device such as the one above introduced.

The invention also provides a method as defined in claim 3, intended for assigning IP home address with a DHCP protocol into a communication equipment (comprising at least two interfaces for simultaneous communications with different access networks).

This method comprises i) using a unique terminal identifier to request a unique IP home address, for a new interface to be used into the communication equipment, near a DHCP server, and ii) switching the assignment of this unique IP home address from an old interface to this new interface.

The method according to the invention may include additional characteristics considered separately or combined, and notably :
- when the unique IP home address and the unique terminal identifier have been previously assigned to a first (current) interface that must be replaced with the new interface, one may i) invalidate the IP home address assignment on the first interface by performing address renewal by using an auxiliary terminal identifier, and ii) assign the unique IP home address giving the unique terminal identifier to the new interface;
- in a variant, when the unique IP home address has been previously assigned giving the unique terminal identifier to a first interface that must be replaced with the new interface, one may suspend locally the previous assignment to the first interface in order to assign the unique IP home address giving the unique terminal identifier to the new interface;
- after having assigned the unique IP home address giving the unique terminal identifier to the new interface, one may update a binding information, defining the new interface in use into the communication equipment and the associated unique IP home address, in a home agent of this communication equipment.

Other features and advantages of the invention will become apparent on examining the detailed specifications hereafter and the appended drawings, wherein:
- figure 1 schematically illustrates an example of network comprising two radio access networks to which a mobile communication equipment, comprising a device according to the invention, may be connected, and
- figure 2 schematically illustrates the main steps of a communication equipment handover between two radio access networks in case where a method according to the invention is implemented.

The appended drawings may serve not only to complete the invention, but also to contribute to its definition, if need be.

The invention aims at offering a device (D), and an associated method, intended for assigning automatically IP home addresses with a DHCP protocol into a communication equipment (T) comprising at least two interfaces (CIj) allowing simultaneous communications with different access networks (ANj).

In the following description it will be considered that the communication equipment (T) is a mobile (or cellular) telephone comprising two radio interfaces (CIj, j = 1 or 2) capable of establishing wireless (or radio) communications with other equipments (including network equipments or elements) through two different radio access networks (ANj) of a communication network. But the invention is not limited to this kind of communication equipment. Indeed, it concerns any type of communication equipment capable of establishing wired communication and/or wireless communication with other equipments through at least two different access networks. So, it could be also a computer, a laptop or a personal digital assistant (or PDA) with a communication module, for instance.

Moreover, in the following description it will be considered that the two radio access networks (ANj) of the communication network are a WiFi access network (AN1) and a WiMAX access network (AN2). But the invention is not limited to these kinds of radio access network. Indeed, it concerns any type of access network to which a communication equipment may be connected. So, it could be also a GSM, GPRS, EDGE, UMTS, LTE, X-DSL or optical fiber access network, for instance.

So in the example the network infrastructure offers MIP (Mobile IP) capabilities.

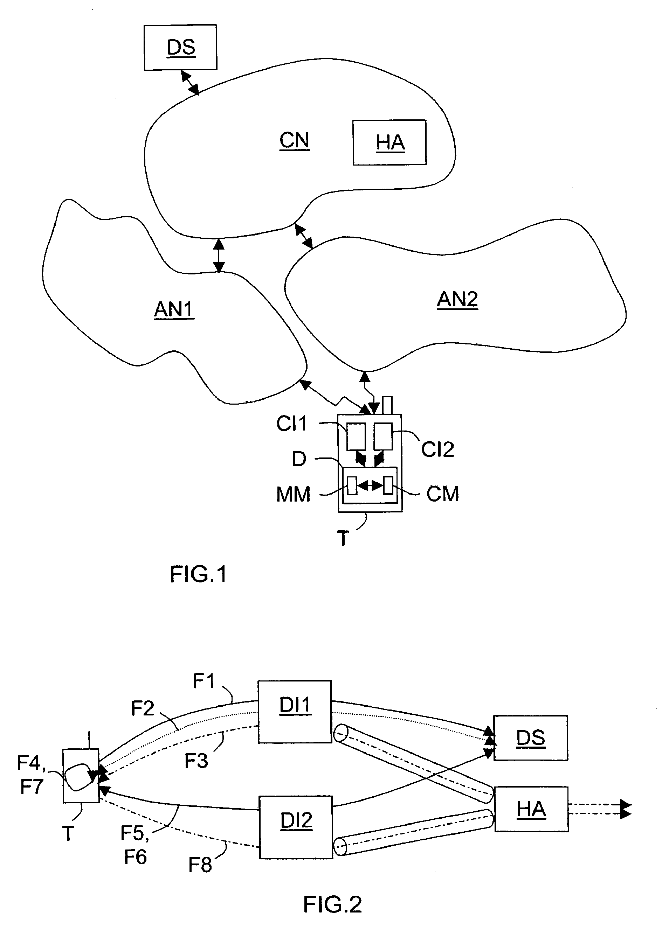

As it is illustrated in the non limiting figure 1, a communication network (implementing the invention) may be embodied in a core network CN connected to at least two access networks ANj. In the illustrated example j = 1 or 2 and the access networks ANj are both of the radio (or wireless) type. Communication equipments T (which are mobile telephones in the example) may establish radio connections (possibly simultaneously) with other equipments through their communication interfaces CIj and the corresponding radio access networks ANj.

A mobile telephone T further comprises a device D which is coupled to its communication interfaces CIj.

According to the invention this device D comprises a management module MM and a control module CM coupled one to the other.

The management module MM is arranged, each time its mobile telephone T has decided to use one of its (communication) interfaces CIj, for requesting an IP home address for this (communication) interface CIj near a DHCP (Dynamic Host Configuration Protocol) server DS, which is connected to the core network CN as illustrated, but which could be also a network equipment of this core network CN, for instance.

It is recalled that the (DHCP) request is sent to the DHCP server DS by the management module MM, through the "new" interface CIj that the mobile telephone T wants to use, and comprises a DHCP client (or terminal) identifier.

The management module MM is also arranged for assigning a requested IP home address (or HoA), provided by the DHCP server DS, to an interface CIj to be used into its mobile telephone T.

So, one may consider that the management module MM acts as a DHCP client under control of the control module CM. But it is also possible to consider that the device D according to the invention acts as a modified DHCP client.

The control module CM is arranged for compelling the management module MM to use a unique terminal (or client) identifier in the DHCP "client id" extension each time it requests an IP home address for a new interface CIj to be used near the DHCP server DS.

It is important to note that when the DHCP server DS receives such a (DHCP) request, comprising a unique terminal (or client) identifier, from a mobile telephone T, through a DHCP infrastructure of the communication network, it is configured to assign an IP home address for the concerned new interface CIj which is the same that the one it would assign to any other interface CIj' of this mobile telephone T. In other words, the DHCP server DS always assigns the same and unique IP home address each time it receives a (DHCP) request comprising the same and unique terminal (or client) identifier whatever the concerned interface CIj.

This unique IP home address is chosen by the DHCP server DS, possibly into a set of addresses, the very first time it receives a request comprising a terminal (or client) identifier from a mobile telephone T.

It is also important to note that the infrastructures of the radio access networks ANj are arranged in order each mobile telephone interface CIj accesses the same DHCP server DS to ensure that the IP home address will be allocated in a consistent and unique way whatever the interface CIj used. For this purpose, it is possible to use a unique DHCP server DS into the communication network, as illustrated.

This DHCP server DS must fully support the standard DHCP specification (notably RFC2131 and RFC2132) to allow client (or terminal) identifier option conformant processing. More precisely, if an IP home address is allocated for a particular client (or terminal) identifier option value set by a DHCP client (device D) and configured at the DHCP server level, the same IP home address will be returned in subsequent allocation requests carrying exactly the same client (or terminal) identifier option value. Preferably the DHCP server DS does not allocate IP home addresses to communication equipments T that do not provide a configured client identifier option value.

The present invention applies to both IPv4 and IPv6 protocols. If IPv4 protocol is solely used, the client identifier option (code 61), as defined in RFC2132, is used. If IPv6 protocol is solely used or both IPv4 and IPv6 protocols are used, the client identifier option is used as defined in RFC4361 to carry the communication equipment identity in both DHCPv4 (RFC2131) and DHCPv6 (RFC3315) protocols. In particular, RFC4361 defines the client identifier option (code 61) with a Type field, an IAID (Interface Address IDentifier) field and a DUID (Device Unique IDentifier) field. In the present invention, the IAID and DUID fields carried by a terminal in DHCPv4 and DHCPv6 PDU's (Packet Data Units) are preferably identical whatever the network interface CIj used. For instance the Type field is always set to OxFF (numeric 255). As far as the DUID format is concerned, the DUID-EN (Enterprise Number) format, as defined in RFC3315, can be also used in the present invention.

Once the device D has received the unique IP home address from the DHCP server DS, the control module CM compels the management module MM to switch properly the assignment of this unique IP home address from the old (current) interface to the new interface CIj to be used.

At least two different assignment implementations may be envisaged at the management module level.

A first assignment implementation is well adapted to the case where the management module MM is classically configured for assigning different IP addresses to the different interfaces CIj of its mobile telephone T. So, when the management module MM has previously assigned the unique IP home address of its mobile telephone T to a first interface CI2 (for instance) that must be replaced with a new interface CI1 (for instance), it invalidates the assignment of the IP home address on the first interface CI2 by changing the terminal (or client) identifier of the interface to an auxiliary (fake) value and then renews the IP address of this first interface CI2. So the unique IP home address is no more assigned to the first interface CI2 and then can be assigned to the new interface CI1 using the unique terminal (client) identifier.

A second assignment implementation is well adapted to the case where the management module MM is not constrained by the use of different IP addresses on the different interfaces CIj of its mobile telephone T. So, when the management module MM has previously assigned the unique IP home address and the unique terminal (or client) identifier of its mobile telephone T to a first interface CI2 (for instance) that must be replaced with a new interface CI1 (for instance), it is compelled by the control module CM to suspend locally and transparently the previous assignment to the first interface CI2 in order to assign the unique IP home address giving the unique terminal (or client) identifier to the new interface CI1. In other words, the MM module acting as a DHCP client does not send a DHCP Decline protocol request on an interface CIj during the interface's IP home address allocation process when the same IP home address is already allocated on one of its interfaces. Instead, the DHCP client (device D) grants the current IP home address allocation and suspends the renewal process of the conflicting interface(s).

Whatever the assignment implementation once the management module MM has assigned the unique IP home address giving the unique terminal (or client) identifier to the new interface CI1, a network function called Proxy-MIP updates the binding information which defines both the new interface CI1 in use into the mobile telephone T and the associated unique IP home address, in the home agent HA of the mobile telephone T. In other words, the binding to the "old" interface CI2 is superseded by the binding to the new interface CI1. Since the old interface DHCP renewal process is being cancelled (because the unique IP home address will not be renewed on the "old" interface), the old binding is not in turn to be renewed even by the network infrastructure. This might happen only for proxy-MIP infrastructures that renew MIP bindings giving DHCP renewals.

It is important to note that in the non limiting example of communication network illustrated in figure 1 the home agent HA of the mobile telephone T is localized into the core network CN which is connected to the radio access networks ANj to which this mobile telephone T is connected. So, the communication network is the home network of the mobile telephone T. But the illustrated communication network could be a foreign network coupled to the home network of the mobile telephone T. In this case the home agent HA of the mobile telephone T is localized into the core network of its home network but not into the core network CN of the foreign network to which it is connected.

It is important to note that a device D, according to the invention, is preferably made of software modules, at least partly. But it could be also made of electronic circuit(s) or hardware modules, or a combination of hardware and software modules (in this case the device D comprises also a software interface allowing inter-working between the hardware and software modules). In case where the device D is made of software modules it can be stored in a memory of a communication equipment T or in any computer software product, such as a CD-ROM, for instance, which can be read by a computer or the like.

One now refers to figure 2 to describe the main steps of an example of communication equipment handover between two radio access networks AN2 and AN1 when the invention is implemented. In this example it is assumed that the communication equipment and the communication network are respectively the mobile telephone T and the communication network (CN, AN1, AN2, HA and DS) illustrated in figure 1 and described above.

In a first step the mobile telephone T has decided to use a first connection for an IP traffic on its first (communication) interface CI1 which is connected to the first access network AN1. So, it sends a DHCP discover (generated by its device D) comprising its unique terminal (or client) identifier on the first interface CI1, i.e. through the first DHCP infrastructure (with Proxy-MIP capabilities) DI1 of the first access network AN1.

In a second step F2 the DHCP server DS proposes an IP_address_X to the mobile telephone T through DHCP Offer which leads to a successful IP home address assignment (or allocation) once DHCP Request/DHCP Ack exchanges with the mobile telephone T are completed through the first DHCP infrastructure DI1. Following DHCP Ack, the connected first access network AN1 updates the MIP Binding of the mobile telephone T near its home agent HA, through its Proxy-MIP function.

In a third step F3 an IP end-user traffic takes place between the mobile telephone T and another distant communication equipment.

In a fourth step F4 the mobile telephone T decides on its own (with the possible assistance of an external Handover Selection function) to carry out a handover of the IP traffic from its first connection to a second connection (through the second access network AN2 to which its second interface CI2 is connected), for instance because of a better wireless signal strength.

In a fifth step F5 the mobile telephone T sends a new DHCP discover still comprising its unique terminal (or client) identifier on the second connection, i.e. through the second DHCP infrastructure (with Proxy-MIP capabilities) DI2 of the second access network AN2. One uses the same terminal (or client) identifier as the one used during the first step on the first connection because this identifier is terminal-unique.

In a sixth step F6 the DHCP server DS proposes again the same (and unique) IP_address_X to the mobile telephone T through DHCP Offer through the second DHCP infrastructure DI2.

In a seventh step F7 the device D of the mobile telephone T sees that the newly proposed IP_address_X is already assigned to the first interface CI1, so it does not decline the DHCP server proposal (DHCP Decline) but rather takes local action to suspend the IP_address_X status (DHCP and operational) on the first connection and accepts IP_address_X configuration on the second connection by sending a final DHCP Ack to the DHCP server DS through the second DHCP infrastructure DI2. This leads to a successful assignment of IP _address_X to the second interface CI2.

In an eighth step F8 the connected second access network AN2 updates the MIP Binding of the mobile telephone T near its home agent HA, through its Proxy-MIP function. The new MIP binding overrides the current MIP binding and thus minimizes IP session outage.

The invention can also be considered in terms of a method for assigning IP home address with a DHCP protocol into a communication equipment T comprising at least two interfaces CIj for simultaneous communications with different access networks ANj.

Such a method may be implemented by means of a communication equipment T, a DHCP server DS and a communication network (CN, AN1, AN2) such as the ones above described with reference to figure 1. Therefore, only its main characteristics will be mentioned hereafter.

The method according to the invention comprises:
i) using a unique terminal (or client) identifier to request a unique IP home address, for a new interface CIj to be used into a communication equipment T, near a DHCP server DS, and
ii) switching the assignment of this unique IP home address from an old interface CIj' to this new interface CIj.

The invention is not limited to the embodiments of method, device and communication equipment described above, only as examples, but it encompasses all alternative embodiments which may be considered by one skilled in the art within the scope of the claims hereafter.

## Claims

1. Device (D) for assigning IP home address with a DHCP protocol into a communication equipment (T) comprising at least two interfaces (Clj) suitable for simultaneous communications with different access networks (ANj), said device (D) comprising a management means (MM) arranged for requesting an IP home address for an interface (Clj) to a DHCP server (DS) and for assigning said requested IP home address to said interface (Clj), wherein the device (D) further comprises a control means (CM) arranged for compelling said management means (MM) i) to use a same and unique terminal identifier each time it requests an IP home address for any new interface (Clj), in order to get always a same and unique IP home address from said DHCP server (DS), and ii) to switch the assignment of this unique IP home address from an old interface (Clj') to a new interface (Clj) to be used, and **characterised in that** said management means (MM), for enabling said switching, is arranged, when it has previously assigned said unique IP home address, corresponding to said unique terminal identifier, to a first interface (Clj') that must be replaced with said new interface (Clj), for a) invalidating the current IP home address assignment of said first interface (Cij') by renewing in DHCP sense the current IP address of said first interface (Clj') by using an auxiliary different terminal identifier for said first interface (Clj'), and b) assigning said unique IP home address, corresponding to said unique terminal identifier, to said new interface (Clj).

2. Device according to claim 1, **characterized in that** said control means (CM) is arranged, when said management means (MM) has previously assigned said unique IP home address, corresponding to said unique terminal identifier, to a first interface (Clj') that must be replaced with said new interface (Clj), for compelling said management means (MM) to, alternatively to a), suspend locally said previous assignment to said first interface (Clj') in order to assign said unique IP home address, corresponding to said unique terminal identifier, to said new interface (Clj).

3. Method for assigning IP home address with a DHCP protocol into a communication equipment (T) comprising at least two interfaces (Clj) suitable for simultaneous communications with different access networks, further comprising i) using a same and unique terminal identifier to request a unique IP home address, for any new interface (Clj) to be used into said communication equipment (T), to a DHCP server (DS), and ii) switching the assignment of this unique IP home address from an old interface (Clj') to said new interface (Clj) to be used, and **characterised in that** said switching includes, when said unique IP home address has been previously assigned using said unique terminal identifier to a first interface (Clj') that must be replaced with said new interface (Clj), a) invalidating the current IP home address assignment on said first interface (Clj') by performing address renewal in DHCP sense using an auxiliary different terminal identifier, and b) assigning said unique IP home address, corresponding to said unique terminal identifier, to said new interface (Clj).

4. Method according to claim 3, **characterized in that**, when said unique IP home address has been previously assigned, corresponding to said unique terminal identifier, to a first interface (Clj') that must be replaced with said new interface (Clj), alternatively to a), suspending locally said previous assignment to said first interface (Clj') in order to assign said unique IP home address, corresponding to said unique terminal identifier, to said new interface (Clj).

5. Method according to one of claims 3 or 4, **characterized in that** after having assigned said unique IP home address, corresponding to said unique terminal identifier, to said new interface (Clj), one updates a binding information, defining the new interface (Clj) in use into said communication equipment (T) and the associated unique IP home address, in a home agent (HA) of said communication equipment (T).

6. Computer software product; **characterized in that** it comprises program code to perform the method according to one of claims 3 to 5.

## Patentansprüche

1. Vorrichtung (D) zum Zuordnen einer IP-Heimatadresse mit einem DHCP-Protokoll zu einem Kommunikationsgerät (T), welches mindestens zwei für die simultane Kommunikation mit unterschiedlichen Zugangsnetzwerken (ANj) geeignete Schnittstellen (Clj) umfasst, wobei die besagte Vorrichtung (D) ein Verwaltungsmittel (MM) umfasst, welches dazu ausgelegt ist, eine IP-Heimatadresse für eine Schnittstelle (Clj) zu einem DHCP-Server (DS) anzufordern und die angeforderte IP-Heimatadresse der besagten Schnittstelle (Clj) zuzuordnen, wobei die Vorrichtung (D) weiterhin ein Steuermittel (CM) umfasst, welches dazu ausgelegt ist, das besagte Verwaltungsmittel (MM) zu zwingen, i) bei jeder Anforderung einer IP-Heimatadresse für eine beliebige neue Schnittstelle (Clj) eine selbe und eindeutige Endgerätekennung zu verwenden, um immer eine selbe und eindeutige IP-Heimatadresse von dem besagten DHCP-Server (DS) zu erhalten, und ii) die Zuordnung dieser eindeutigen IP-Heimatadresse von einer alten Schnittstelle (Clj') auf eine zu benutzende neue Schnittstelle (Clj) umzuschalten, und **dadurch gekennzeichnet, dass** das besagte Verwaltungsmittel (MM) für das Ermöglichen des besagten Umschaltens, wenn es vorher die besagte IP-Heimatadresse, welche der besagten eindeutigen Endgerätekennung entspricht, einer ersten Schnittstelle (Clj'), die durch die besagte neue Schnittstelle (Clj) zu ersetzen ist, zugeordnet hat, dazu ausgelegt ist, a) die Zuordnung der aktuellen IP-Heimatadresse der besagten ersten Schnittstelle (Clj') durch Erneuern, im Sinne des DHCP, der aktuellen IP-Adresse der besagten ersten Schnittstelle (Clj') durch Verwenden einer unterschiedlichen Endgeräte-Hilfskennung für die erste Schnittstelle (Clj') au annullieren, und b) die besagte eindeutige IP-Heimatadresse, welche der besagten Endgerätekennung entspricht, der besagten neuen Schnittstelle (Clj) zuzuordnen.

2. Vorrichtung nach Anspruch 1, **dadurch gekennzeichnet, dass** das besagte Steuermittel (CM) dazu ausgelegt ist, das besagte Verwaltungsmittel (MM) zu zwingen, alternativ zu a) die besagte vorherige Zuordnung zu der besagten ersten Schnittstelle (Clj') lokal zu sperren, wenn das besagte Verwaltungsmittel (MM) die besagte eindeutige IP-Heimatadresse, welche der besagten eindeutigen Endgerätekennung entspricht, vorher einer ersten Schnittstelle (Clj'), welche durch die besagte neue Schnittstelle (Clj) zu ersetzen ist, zugeordnet hat, um die besagte eindeutige IP-Heimatadresse, welche der besagten eindeutigen Endgerätekennung entspricht, der besagten neuen Schnittstelle (Clj) zuzuordnen.

3. Verfahren zum Zuordnen einer IP-Heimatadresse mit einem DHCP-Protokoll zu einem Kommunikationsgerät (T), welches mindestens zwei für die simultane Kommunikation mit unterschiedlichen Zugangsnetzwerken geeignete Schnittstellen (Clj) umfasst, weiterhin umfassend i) das Verwenden einer selben und eindeutigen Endgerätekennung, um eine eindeutige IP-Heimatadresse für eine beliebige in dem besagten Kommunikationsgerät (T) zu benutzende neue Schnittstelle (Clj) von dem besagten DHCP-Server (DS) anzufordern, und ii) das Umschalten der Zuordnung dieser eindeutigen IP-Heimatadresse von einer alten Schnittstelle (Clj') auf die besagte zu benutzende neue Schnittstelle (Clj), und **dadurch gekennzeichnet, dass** das besagte Umschalten, wenn die besagte eindeutige IP-Heimatadresse vorher unter Verwendung der besagten eindeutigen Endgerätekennung einer durch die besagte neue Schnittstelle (Clj) zu ersetzenden ersten Schnittstelle zugeordnet worden ist, a) das Annullieren der Zuordnung der aktuellen IP-Heimatadresse auf der besagten ersten Schnittstelle (Clj') durch Durchführen einer Erneuerung der Adresse, im Sinne des DHCP, durch Verwenden einer unterschiedlichen Endgeräte-Hilfskennung, und b) das Zuordnen der besagten eindeutigen IP-Heimatadresse, welche der besagten Endgerätekennung entspricht, zu der besagten neuen Schnittstelle (Clj) umfasst.

4. Verfahren nach Anspruch 3, **dadurch gekennzeichnet, dass**, wenn die besagte eindeutige IP-Heimatadresse, welche der besagten eindeutigen Endgerätekennung entspricht, vorher einer durch die besagte neue Schnittstelle (Clj) zu ersetzenden ersten Schnittstelle (Clj') zugeordnet worden ist, alternativ zu a) die besagte vorherige Zuordnung zu der besagten ersten Schnittstelle (Clj') lokal gesperrt wird, um die besagte eindeutige IP-Heimatadresse, welcher der besagten eindeutigen Endgerätekennung entspricht, der besagten neuen Schnittstelle (Clj) zuzuordnen.

5. Verfahren nach einem der Ansprüche 3 oder 4, **dadurch gekennzeichnet, dass** man nach dem Zuordnen der besagten eindeutigen IP-Heimatadresse, welche der besagten eindeutigen Endgerätekennung entspricht, zu der besagten neuen Schnittstelle (Clj) eine Bindeinformation, welche die in dem besagten Kommunikationsgerät (T) benutzte neue Schnittstelle (Clj) und die assoziierte eindeutige IP-Heimatadresse in einem Heimatagenten (HA) des besagten Kommunikationsgeräts (T) definiert, aktualisiert.

6. Computer-Softwareprodukt, **dadurch gekennzeichnet, dass** es einen Programmcode zum Durchführen des Verfahrens nach einem der Ansprüche 3 bis 5 umfasst.

## Revendications

1. Dispositif (D) pour attribuer une adresse IP locale avec un protocole DHCP dans un équipement de communication (T) comprenant au moins deux interfaces (Clj) adaptées pour des communications simultanées avec des réseaux d'accès différents (ANj), ledit dispositif (D) comprenant des moyens de gestion (MM) conçus pour demander une adresse IP locale pour une interface (Clj) à un serveur DHCP (DS) et pour attribuer ladite adresse IP locale demandée à ladite interface (Clj), le dispositif comprenant en outre des moyens de commande (CM) conçus pour obliger lesdits moyens de gestion (MM) i) à utiliser un même et unique identifiant de terminal chaque fois qu'ils demandent une adresse IP locale pour une quelconque nouvelle interface (Clj), afin d'obtenir toujours une même et unique adresse IP locale à partir dudit serveur DHCP (DS), et ii) à faire commuter l'attribution de cette adresse IP locale unique d'une interface ancienne (Clj') à une interface nouvelle (Clj) à utiliser, et **caractérisé en ce que** lesdits moyens de gestion (MM), permettant ladite commutation, sont conçus, lorsqu'ils ont précédemment attribué ladite adresse IP locale unique, correspondant audit identifiant de terminal unique, à une première interface (Clj') qui doit être remplacée par ladite interface nouvelle (Clj), pour a) invalider l'attribution de l'adresse IP locale actuelle de ladite première interface (Clj') en renouvelant par détection DHCP l'adresse IP actuelle de ladite première interface (Clj') en utilisant un identifiant de terminal auxiliaire différent pour ladite première interface (Clj'), et b) attribuer ladite adresse IP locale unique, correspondant audit identifiant de terminal unique, à ladite nouvelle interface (Clj).

2. Dispositif selon la revendication 1, **caractérisé en ce que** lesdits moyens de commande (CM) sont conçus, lorsque lesdits moyens de gestion (MM) ont précédemment attribué ladite adresse IP locale unique, correspondant audit identifiant de terminal unique, à une première interface (Clj') qui doit être remplacée par ladite nouvelle interface (Clj), pour obliger lesdits moyens de gestion (MM), en variante à a), à suspendre localement ladite attribution précédente à ladite première interface (Clj') afin d'attribuer ladite adresse IP locale unique, correspondant audit identifiant de terminal unique, à ladite nouvelle interface (Clj).

3. Procédé pour attribuer une adresse IP locale avec un protocole DHCP dans un équipement de communication (T) comprenant au moins deux interfaces (Clj) adaptées pour des communications simultanées avec des réseaux d'accès différents, comprenant en outre i) l'utilisation d'un même et unique identifiant de terminal pour demander une adresse IP locale unique, pour une quelconque nouvelle interface (Clj) à utiliser dans ledit équipement de communication (T), à un serveur DHCP (DS), et ii) la commutation de l'attribution de cette adresse IP locale unique d'une interface ancienne (Clj') à ladite interface nouvelle (Clj) à utiliser, et **caractérisée en ce que** ladite commutation comprend, lorsque ladite adresse IP locale unique a été précédemment attribuée en utilisant ledit identifiant de terminal unique à une première interface (Clj') qui doit être remplacée par ladite nouvelle interface (Clj), a) l'invalidation de l'attribution de l'adresse IP locale actuelle sur ladite première interface (Clj') en effectuant un renouvellement d'adresse par détection DHCP en utilisant un identifiant de terminal auxiliaire différent, et b) l'attribution de ladite adresse IP locale unique, correspondant audit identifiant de terminal unique, à ladite nouvelle interface (Clj).

4. Procédé selon la revendication 3, **caractérisé par**, lorsque ladite adresse IP locale unique, correspondant audit identifiant de terminal unique, a été précédemment attribuée à une première interface (Clj') qui doit être remplacée par ladite nouvelle interface (Clj), en variante à a), la suspension locale de ladite attribution précédente à ladite première interface (Clj') afin d'attribuer ladite adresse IP locale unique, correspondant audit identifiant de terminal unique, à ladite nouvelle interface (Clj).

5. Procédé selon la revendication 3 ou 4, **caractérisé en ce que**, après avoir attribué ladite adresse IP locale unique, correspondant audit identifiant de terminal unique, à ladite nouvelle interface (Clj), on met à jour des informations de liaison, définissant la nouvelle interface (Clj) utilisée dans ledit équipement de communication (T) et l'adresse IP locale unique associée, dans un agent local (HA) dudit équipement de communication (T).

6. Produit logiciel informatique, **caractérisé en ce qu'**il comprend un code de programme pour exécuter le procédé selon l'une des revendications 3 à 5.
